# EUROPEAN PATENT APPLICATION

(11) **EP 4 015 934 A1**
(43) Date of publication of application: **22.06.2022**
(21) Application number: 21213701.2
(22) Date of filing: 10.12.2021
(51) Int. Cl.: F24H 1/14, F24H 8/00, C02F 1/66

(54) **CONDENSING BOILER**

(30) Priority: 21.12.2020 IT 202000031667
(71) Applicant: Riello S.p.A., 37045 Legnago (IT)
(72) Inventor: CASIRAGHI, Stefano, 37045 LEGNAGO (VR) (IT); CIOFOLO, Noé, 37045 LEGNAGO (VR) (IT)
(74) Representative: Andreotti, Erika

(57) **Abstract**

A condensing boiler has an outer casing (2); a burner (3), which is arranged within the outer casing (2) and is configured to produce heating gases; a heat exchanger (4), which is arranged within the outer casing (2), is supplied with the heating gases of the burner (3) and is configured to heat a working fluid; and a condensate drain assembly (5), which is arranged downstream of the heat exchanger (4), and is configured to convey to a drain circuit (6) a condensate liquid generated by the at least partial condensation of the heating gases;
the condensate drain assembly (5) being arranged within the outer casing (2) and comprising a treatment device (15) of the condensate liquid, which is provided with a filter (16) configured to vary the pH value of the condensate liquid passing through the same.

## Description

### CROSS-REFERENCE TO RELATED APPLICATIONS

This Patent Application claims priority from Italian Patent Application No. 102020000031667 filed on December 21, 2020.

### TECHNICAL FIELD

The present invention relates to a condensing boiler.

### BACKGROUND ART

In order to tackle the problem of global pollution and the resulting global warming, "condensing" type boilers have been developed in recent decades.

As is known, each condensing boiler comprises a heat exchanger; a burner, which is configured to emit heating gases at the heat exchanger; and a drain assembly, which is arranged downstream of the heat exchanger and is configured to collect a condensate liquid generated by the condensation of the heating gases and to convey said condensate liquid to a drain.

In particular, the condensate liquid is generated by the condensation of water vapor contained in the heating gases as a product of combustion in the burner.

Compared to traditional boilers, condensing boilers allow to recover the latent condensation heat from the heating gases by means of the condensation of the water vapor contained in the heating gases before the heating gases exit from a flue pipe of the condensing boiler. Said latent condensation heat helps to preheat the water that flows inside the heat exchanger.

The condensation of water vapor generates a condensate liquid inside the condensing boiler, in which substances derived from combustion are dissolved, potentially harmful to the internal components of the condensing boiler and to the drain pipes. In particular, the condensate liquid is largely acidic and can be corrosive in the long run.

In detail, the introduction of the condensate liquid into a drain network leads to the risk that said liquid may corrode the network itself. By way of example, the condensate liquid could be evacuated together with the rain drains, usually made of materials that are not resistant to acid corrosion.

Furthermore, the drain assembly comprises a siphon, which is configured to receive the condensate liquid and is commonly U-shaped to allow the drainage of condensate liquid and, at the same time, guarantee a hydraulic seal against the exiting of the heating gases from the condensing boiler through the drain assembly.

### DISCLOSURE OF INVENTION

It is therefore an object of the present invention to provide a condensing boiler which is reliable and, at the same time, simple to install.

In particular, an object of the present invention is to provide a condensing boiler which reduces the risk of introducing condensate liquid into the drain network that could damage the internal components of the boiler, the drain pipes and the drain network and, at the same time, which reduces the risk of the heating gases exiting through the condensate drain assembly.

According to the present invention, a condensing boiler is manufactured comprising:
- an outer casing;
- a burner, which is arranged within the outer casing and is configured to produce heating gases;
- a heat exchanger, which is arranged within the outer casing, is supplied with the heating gases of the burner and is configured to heat a working fluid; and
- a condensate drain assembly, which is arranged downstream of the heat exchanger, and is configured to convey to a drain circuit a condensate liquid generated by the at least partial condensation of the heating gases;
the condensate drain assembly being arranged within the outer casing and comprising a treatment device of the condensate liquid, which is provided with a filter configured to vary the pH value of the condensate liquid passing through the same.

Thanks to the present invention, the risk of damage to the internal components of the boiler and to the drain pipes is significantly reduced by the presence of the treatment device in the condensate drain assembly. Moreover, the boiler according to the present invention can be installed in a simple and fast way. The treatment device, in fact, is already installed in the condensate drain assembly and, therefore, no further and complex installation operations are required during the installation of the boiler.

In particular, the filter of the treatment device is configured to contain salts.

In greater detail, said salts are configured to neutralize or raise the pH of the condensate liquid.

In this way, the filter lowers the risk of damage to the internal components of the boiler and to the pipes of the drain circuit outside the boiler.

In particular, the filter is selectively removable from the drain assembly, so that it can be replaced, if necessary, with a new filter. In fact, after a given period of time the salts contained in the filter lose their effectiveness and need to be replaced.

In particular, the treatment device comprises a first conduit in which the filter is housed.

In this way, it is possible to connect the first conduit to a portion of the drain assembly, thus making the assembly and removal operations of the treatment device simple and fast.

In particular, the filter is sized so as to filter all the condensate liquid passing through the treatment device.

In this way, all the condensate liquid is filtered by the treatment device before being conveyed to the condensate drain circuit.

In particular, the drain assembly comprises a siphon fed with the condensate liquid.

In this way, it is possible to allow drainage of the condensate liquid and, at the same time, guarantee a hydraulic seal against the exit of the heating gases from the condensing boiler through the drain assembly.

Furthermore, in the absence, inside the siphon, of condensate liquid that allows the hydraulic sealing of the heating gases, the presence of the treatment device at least partially obstructs the passage of the heating gases through the filter, thus limiting the exit of the heating gases from the drain assembly.

In essence, the arrangement in series of the siphon and the treatment device produces a synergistic effect, contributing to considerably limiting the risks of the exit of the heating gases from the drain assembly in all the operating steps of the boiler.

According to a first embodiment, the treatment device is arranged downstream of the siphon.

In greater detail, the siphon comprises an inlet and an outlet; the treatment device being coupled to the outlet of the siphon.

According to a second embodiment, the treatment device is arranged upstream of the siphon.

In greater detail, the drain assembly comprises a collection tray for collecting the condensate liquid, and a second conduit, which connects the collection tray to the siphon; the treatment device being coupled to the second conduit between the collection tray and the siphon.

According to a third embodiment, the siphon comprises the treatment device.

In particular, the siphon comprises a first substantially U-shaped portion, so as to allow the accumulation of condensate liquid in the lower part of the first portion to obstruct the passage of the heating gases through the siphon and ensure a hydraulic seal against the exit of the heating gases.

In greater detail, the first portion of the siphon has a labyrinth-like path.

If the siphon is substantially devoid of condensate liquid, for example in the re-ignition steps of the condensing boiler after a standstill period, due to the labyrinth shape of the first portion of the siphon, the heating gases that pass through the first portion of the siphon undergo pressure drops which lower the pressure of the heating gases and limit any exiting of the heating gases from the drain assembly.

### BRIEF DESCRIPTION OF THE DRAWINGS

Further characteristics and advantages of the present invention will appear clear from the following description of a non-limiting embodiment, with reference to the attached Figures, wherein:
- Figures 1-3 are schematic representations of respective embodiments of a condensing boiler manufactured according to the present invention;
- Figure 4 is a side elevation view of a detail of the condensing boiler of Figure 1;
- Figure 5 is a sectional view of the detail of the condensing boiler of Figure 4;
- Figure 6 is a side elevation view of the detail of the condensing boiler of Figure 4 in a particular operating configuration; and
- Figure 7 is a perspective view of the detail of the condensing boiler of Figure 4.

### BEST MODE FOR CARRYING OUT THE INVENTION

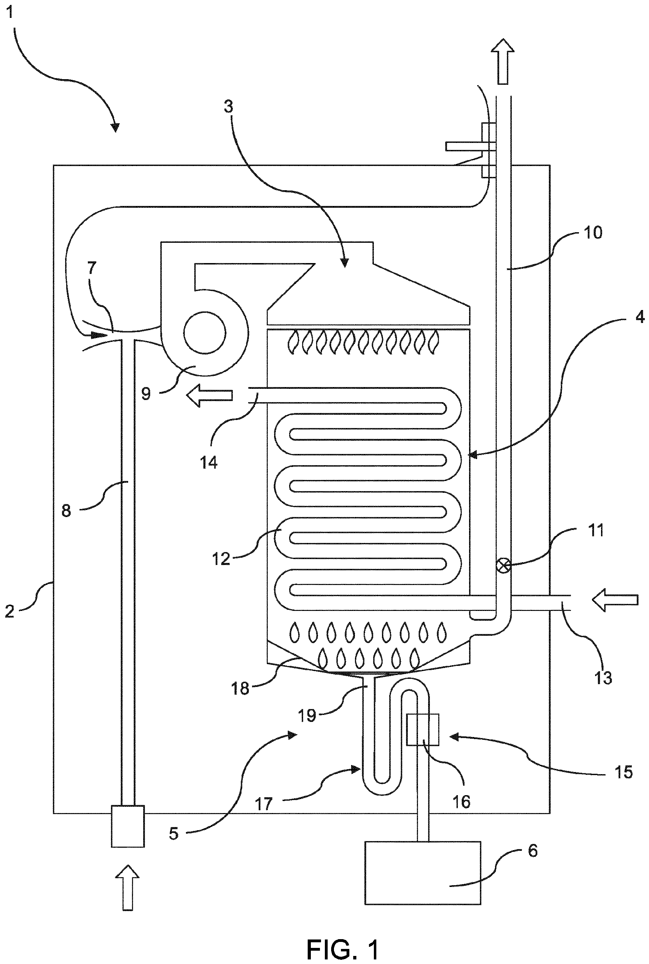

With reference to Figures 1-3, the reference number 1 denotes as a whole a boiler of the "condensing" type.

The condensing boiler 1 comprises an outer casing 2; a burner 3, which is arranged within the outer casing 2 and is configured to produce heating gases; a heat exchanger 4, which is arranged within the outer casing 2, is supplied with the heating gases of the burner 3 and is configured to heat a working fluid; and a drain assembly 5, which is arranged downstream of the heat exchanger 4 within the outer casing 2, and is configured to convey to a condensate drain circuit 6 a condensate liquid generated by the at least partial condensation of the heating gases.

Furthermore, the condensing boiler 1 comprises an air supply conduit 7; a gas supply conduit 8; a suction device 9 configured to suck air and gas through the respective conduits 8 and 9 and to convey the sucked air and gas to the burner 3; a conduit 10 for evacuating the heating gases; and a suction device 11 configured to suck the heating gases and convey the heating gases outside the condensing boiler 1 through the conduit 10.

The outer casing 2 encloses the burner 3, the heat exchanger 4 and the drain assembly 5. According to an embodiment, not shown in the attached figures, the outer casing 2 comprises an opening, through which the inside of the outer casing 2 is accessible; and a movable portion, which is configured to selectively open/close said opening.

The heat exchanger 4 comprises a conduit 12 for supplying the working fluid, which has an inlet portion 13 for the inlet of the working fluid into the condensing boiler 1 and an outlet portion 14 for the exit of the working fluid from the condensing boiler 1.

The drain assembly 5 comprises a treatment device 15 of the condensate liquid, which is provided with a filter 16 configured to vary the pH value of the condensate liquid that passes through the same; and a siphon 17 fed with the condensate liquid.

As will be seen in detail below, the treatment device 15 is selectively removable from the drain assembly 5, so as to allow the filter 16 to be replaced.

In particular, the siphon 17 is configured to convey the condensate liquid towards the condensate drain circuit 6 and, at the same time, to obstruct the passage of the heating gases through the siphon 17.

Both the treatment device 15 and the siphon 17 are enclosed within the outer casing 2.

Furthermore, the drain assembly 5 comprises a collection tray 18 for collecting the condensate liquid in the heat exchanger 4, and a conduit 19, which connects the collection tray 18 to the siphon 17.

In essence, the collection tray 18, the conduit 19, the siphon 17 and the treatment device 15 are arranged in series so as to hydraulically connect the collection tray 18 to the condensate drain circuit 6 and to allow the evacuation of the condensate from the heat exchanger 4.

With reference to Figure 1, a first embodiment of the present invention is shown, in which the treatment device 15 is arranged downstream of the siphon 17.

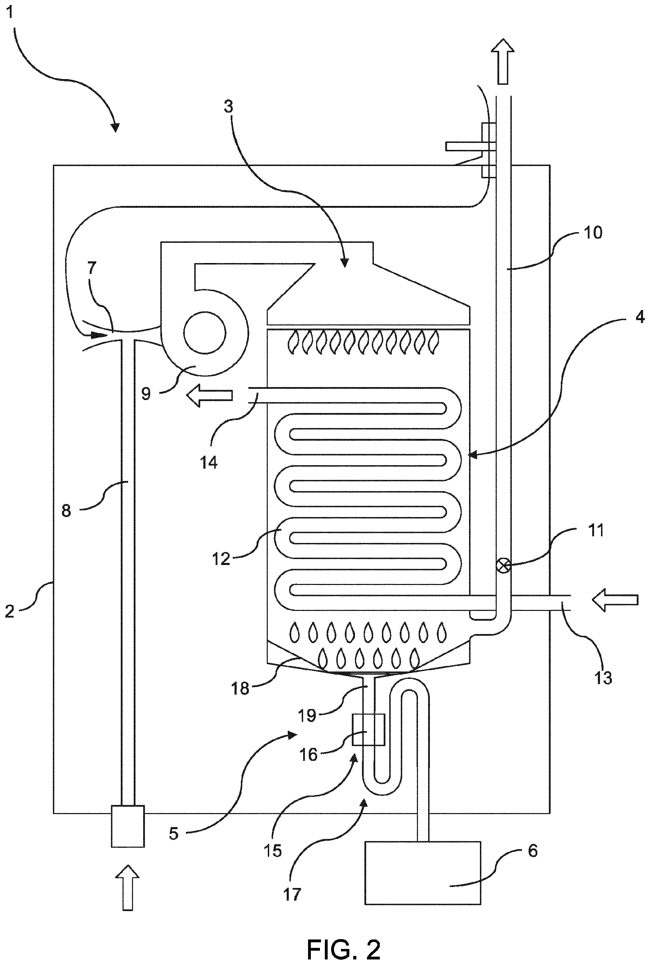

With reference to Figure 2, a second embodiment of the present invention is shown, in which the treatment device 15 is arranged upstream of the siphon 17. In this configuration, the treatment device 15 is coupled to the conduit 19 between the collection tray 18 and siphon 17.

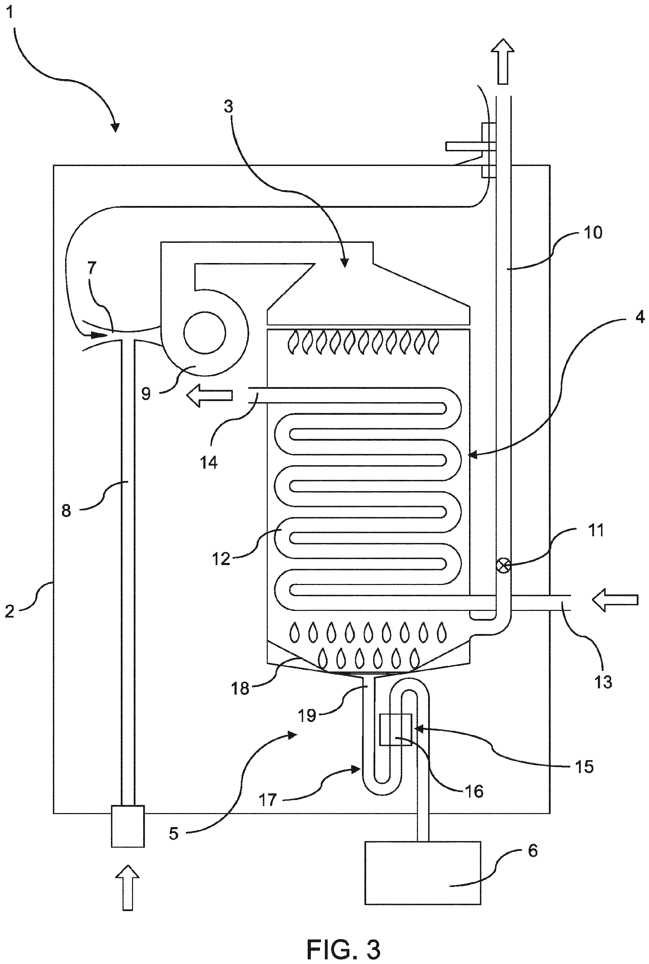

With reference to Figure 3, a third embodiment of the present invention is shown, in which the siphon 17 comprises the treatment device 15. In other words, the treatment device 15 is integrated in the siphon 17.

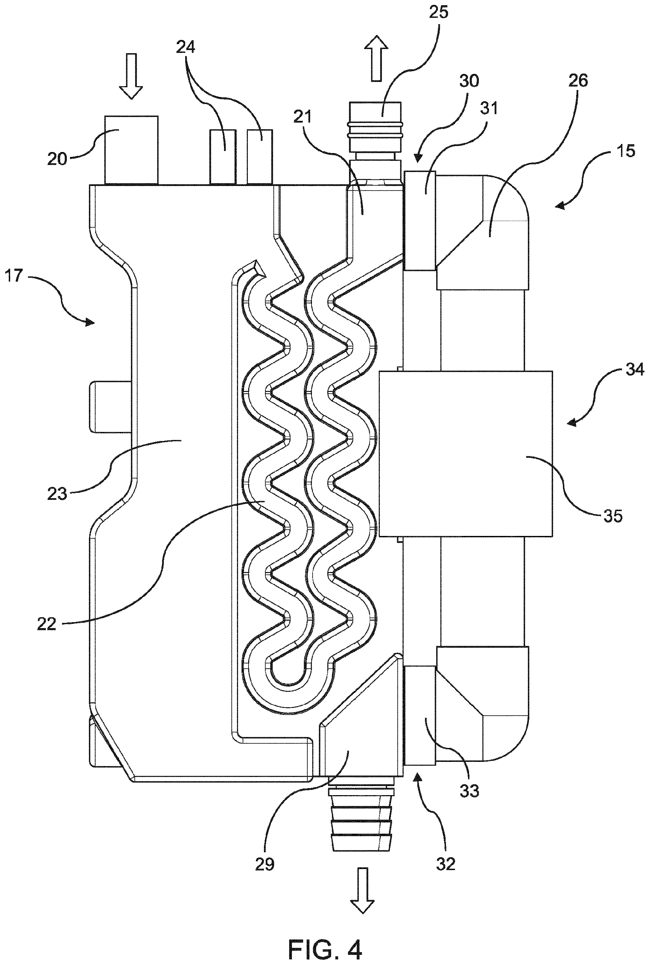

With reference to Figures 4-7, a detail of the first embodiment is shown, in which the siphon 17 comprises an inlet 20 for the condensate liquid and an outlet 21 for the condensate liquid.

In the non-limiting example described and illustrated herein, the siphon 17 comprises a portion 22 substantially U-shaped; a chamber 23 for collecting the condensate liquid arranged upstream of the portion 22; outlets 24 for the heating gases, which are arranged upstream of the portion 22; and a further outlet 25 for the heating gases, which is arranged downstream of the portion 22.

The inlet 20 is configured to be connected to the conduit 19 (Figures 1-3), whereas the outlet 21 is connected to the treatment device 15.

The portion 22 of the siphon 17 has a labyrinth-like path, in particular a path with narrow radius curves. In use, the condensate liquid which accumulates in the lower curved part of the U-shape of the portion 22 obstructs the passage of the heating gases through the siphon 17.

The chamber 23 is configured to collect and contain the condensate liquid coming from the conduit 19 and is connected to the inlet of the portion 22. In greater detail, the inlet of the portion 22 is connected to the upper part of the chamber 23. In this way, in use, when the condensate liquid inside the chamber 23 reaches a given level, the condensate liquid overflows and passes into the portion 22.

Furthermore, the chamber 23 is shaped so as to collect any solid residues coming from the inlet 20 of the siphon 17, preventing said solid deposits from entering the portion 22.

The outlets 24 are configured to collect and convey further waste fluids deriving from further components of the condensing boiler 1.

The outlet 25 is configured to avoid the formation of air bubbles inside the upper part of the portion 22 of the siphon 17, without risk of the exiting of the condensate liquid.

In this same circumstance, in use, the presence of the treatment device 15 coupled to the outlet 21 of the siphon 17 at least partially obstructs the passage of the heating gases through the treatment device 15, favouring the exit of the heating gases through the outlet 25.

In the case described and illustrated herein, which does not limit the present invention, the treatment device 15 comprises a conduit 26, preferably C-shaped, in which the filter 16 is housed.

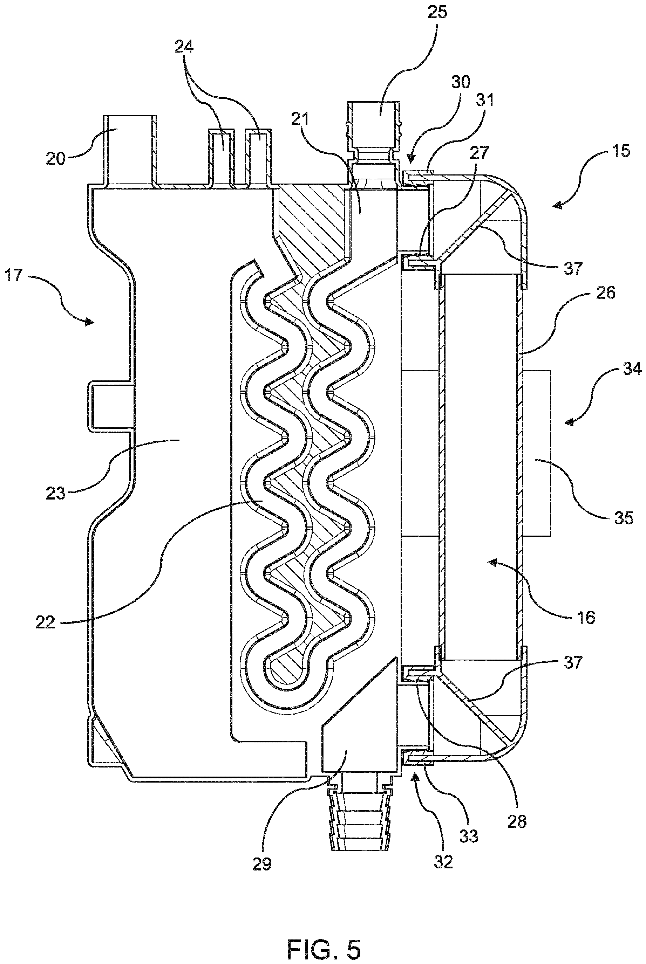

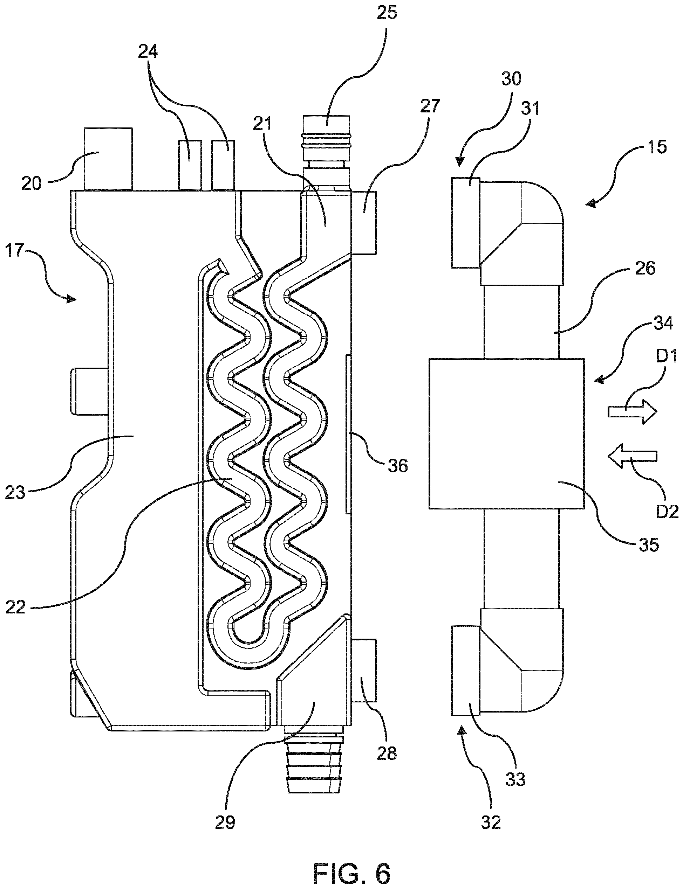

With reference to Figures 5 and 6, the siphon 17 comprises an attachment 27 arranged downstream of the outlet 21, and an attachment 28 arranged upstream of a drain portion 29, which can be connected to the condensate drain circuit 6 (Figures 1-3) .

The attachments 27 and 28 are configured to connect the siphon 17 to the conduit 26.

In particular, the conduit 26 has an inlet 30, which is configured to couple with the attachment 27 of the siphon 17 and is preferably provided with a hydraulic sealing element 31, and an outlet 32, which is configured to couple with the attachment 28 and is preferably provided with a hydraulic sealing element 33.

In greater detail, the inlet 30 and the outlet 32 are configured to snap fit with the attachment 27 and the attachment 28 of the siphon 17, respectively.

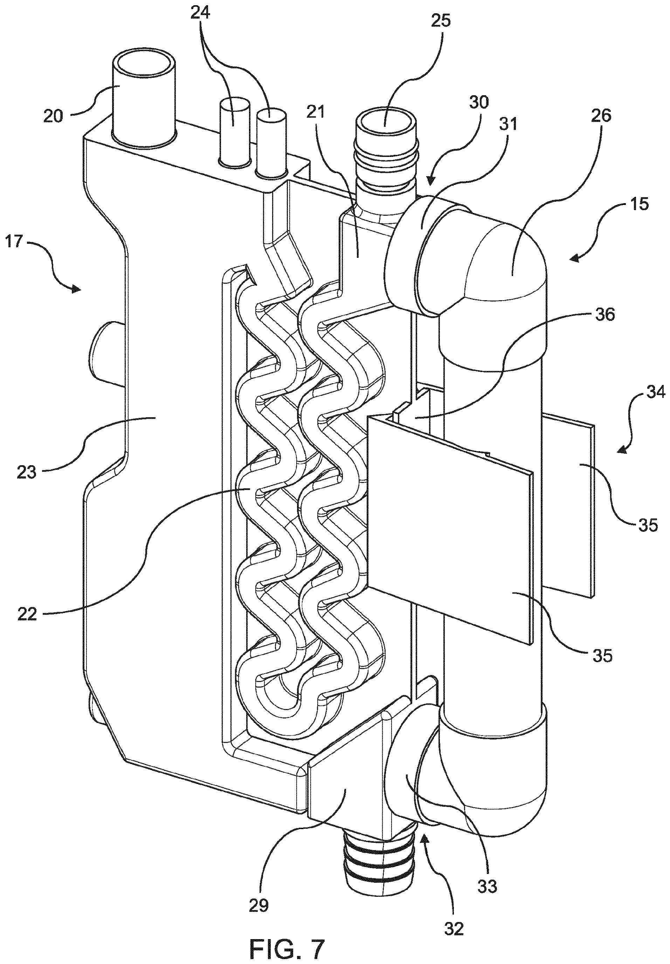

Furthermore, with reference to Figure 7, the treatment device 15 comprises a coupling device 34, which is configured to selectively engage/disengage the treatment device 15 to/from the drain assembly 5. In the case described and illustrated herein, the coupling device 34 comprises two fins 35, which are fixed to the conduit 26 and are configured to snap fit with a gripping portion 36 of the siphon 17.

With reference to Figure 5, the filter 16 of the treatment device 15 is configured to contain salts, which are configured to neutralize or raise the pH of the condensate liquid.

In the non-limiting example described and illustrated herein, the filter 16 is delimited by the side wall of the conduit 26 and by grids 37, which are housed inside the conduit 26 and are configured to define a salt containment barrier and, at the same time, to allow the passage of the condensate liquid through the conduit 26. In this case, the filter 16 is sized so as to filter all the condensate liquid passing through the treatment device 15.

With reference to Figure 6, the replacement of the filter 16 is carried out by removing the treatment device 15 from the drain assembly 5 and by coupling to the drain assembly 5 a new treatment device 15 or in which the filter 16 is reconditioned.

In particular, by manually pressing on the portion of the fins 35 opposite the portion of the fins 35 hooked to the gripping portion 36, the coupling device 34 is released from the siphon 17.

At this point, by pulling the conduit 26 in the direction D1, the inlet 30 of the conduit 26 is decoupled from the attachment 27 of the siphon 17 and the outlet 32 of the conduit 26 is decoupled from the attachment 28 of the siphon 17.

The coupling of the new treatment device 15 to the siphon 17 is carried out by pushing the conduit 26 in the direction D2, opposite to the direction D1, until the inlet 30 and the outlet 32 of the conduit 26 are snap fitted respectively onto the attachment 27 and onto the attachment 28 of the siphon 17 and the two fins 35 are snap fitted onto the gripping portion 36 of the siphon 17.

Finally, it is clear that variations with respect to the embodiments described can be made to the present invention without thereby departing from the scope of the attached claims.

## Claims

1. A condensing boiler comprising:
- an outer casing (2)
- a burner (3), which is arranged within the outer casing (2) and is configured to produce heating gases;
- a heat exchanger (4), which is arranged within the outer casing (2), is supplied with heating gases from the burner (3) and is configured to heat a working fluid; and
- a condensate drain assembly (5), which is arranged downstream of the heat exchanger (4), and is configured to convey to a drain circuit (6) a condensate liquid generated by the at least partial condensation of the heating gases;
the condensate drain assembly (5) being arranged within the outer casing (2) and comprising a treatment device (15) of the condensate liquid, which is provided with a filter (16) configured to vary the pH value of the condensate liquid passing through the same.

2. The condensing boiler as claimed in Claim 1, wherein the filter (16) of the treatment device (15) is configured to contain salts.

3. The condensing boiler as claimed in Claim 2, wherein said salts are configured to neutralize or raise the pH of the condensate liquid.

4. The condensing boiler as claimed in any one of the foregoing Claims, wherein the filter (16) is selectively removable from the drain assembly (5).

5. The condensing boiler as claimed in any one of the foregoing Claims, wherein the treatment device (15) comprises a first conduit (26) in which the filter (16) is housed.

6. The condensing boiler as claimed in any one of the foregoing Claims, wherein the filter (16) is sized to filter all the condensate liquid passing through the treatment device (15) .

7. The condensing boiler as claimed in any one of the foregoing Claims, wherein the treatment device (15) comprises a coupling device (34), which is configured to selectively engage/disengage the treatment device (15) to/from the drain assembly (5).

8. The condensing boiler as claimed in any one of the foregoing Claims, wherein the drain assembly (5) comprises a siphon (17) fed with condensate liquid.

9. The condensing boiler as claimed in Claim 8, wherein the treatment device (15) is arranged downstream of the siphon (17) .

10. The condensing boiler as claimed in Claim 9, wherein the siphon (17) comprises an inlet (20) and an outlet (21); the treatment device (15) being coupled to the outlet (21) of the siphon (17).

11. The condensing boiler as claimed in Claim 8, wherein the treatment device (15) is arranged upstream of the siphon (17) .

12. The condensing boiler as claimed in Claim 11, wherein the drain assembly (5) comprises a collection tray (18) for collecting the condensate liquid, and a second conduit (19), which connects the collection tray (18) to the siphon (17); the treatment device (15) being coupled to the second conduit (19) between the collection tray (18) and the siphon (17).

13. The condensing boiler as claimed in Claim 8, wherein the siphon (17) comprises the treatment device (15).

14. The condensing boiler as claimed in any one of Claims 8 to 13, wherein the siphon (17) comprises a first portion (22) substantially U-shaped.

15. The condensing boiler as claimed in Claim 14, wherein the first portion (22) of the siphon (17) has a labyrinth-like path.
